**Europäisches Patentamt**

**European Patent Office**

**Office européen des brevets**

(19)

(11) Veröffentlichungsnummer: **0 144 360 B1**

(12) **EUROPÄISCHE PATENTSCHRIFT**

(45) Veröffentlichungstag der Patentschrift:
**24.06.87**

(21) Anmeldenummer: **84901955.9**

(22) Anmeldetag: **25.05.84**

(86) Internationale Anmeldenummer:
**PCT/CH 84/00084**

(87) Internationale Veröffentlichungsnummer:
**WO 84/04697 (06.12.84 Gazette 84/28)**

(51) Int. Cl.⁴: **B 01 D 29/24,** B 01 D 29/26, B 01 D 29/42

(54) **PATRONENFILTER SOWIE FILTEREINRICHTUNG.**

(30) Priorität: **27.05.83 CH 2894/83**

(43) Veröffentlichungstag der Anmeldung:
**19.06.85 Patentblatt 85/25**

(45) Bekanntmachung des Hinweises auf die Patenterteilung:
**24.06.87 Patentblatt 87/26**

(84) Benannte Vertragsstaaten:
**BE**

(56) Entgegenhaltungen:
**CH - A - 401 921**
**DE - A - 1 536 913**
**US - A - 2 522 904**
**US - A - 3 502 214**

(73) Patentinhaber: **FILTRO S.A., Route de Chêne, 5, CH-1207 Geneve (CH)**

(72) Erfinder: **GRAF, Anton, 14, rue Robert-de-Traz, CH-1206 Genève (CH)**

(74) Vertreter: **Plucker, Guy et al, OFFICE KIRKPATRICK 4 Square de Meeûs, B-1040 Bruxelles (BE)**

ACTORUM AG

**Beschreibung**

Die vorliegende Erfindung betrifft einen Patronenfilter, bei dem ein Gehäuse mit einem Einlauf und einem Auslauf für Flüssigkeit vorliegt, auf einer Aufnahmeplatte des Gehäuses eine innere und eine äussere konzentrische, im wesentlichen zylindrische Filterelemente aufweisende Filterpatrone angeordnet ist, wobei einerseits die Innenfläche des inneren Elementes über einen Zuführkanal an die Einlauföffnung angeschlossen ist und andererseits mit der Aussenfläche des äusseren Elementes in Strömungsverbindung steht und mindestens eines der Elemente ein gefaltetes Filterelement ist und die beiden Elemente durch einen ringförmigen an den Auslauf angeschlossenen Abflusskanal getrennt sind, in welchem ein im wesentlichen zylindrisches Stützelement aus biegsamem Material mit Öffnungen für einen Flüssigkeitsdurchfluss angeordnet ist, das Widerstand gegen ein Zusammendrücken in radialer Richtung leistet, sowie eine Filtereinrichtung mit mindestens einem derartigen Patronenfilter.

Der bekannte Patronenfilter der vorgenannten Art (z.B. DE-A 2 629 466) dient zur Reinigung von Öl als Arbeitsflüssigkeit und besteht aus einer Gehäuseglocke, die auf einem Unterteil abnehmbar aufgesetzt ist. Das Öl strömt dabei unter Druck durch den Patronenfilter. Die Filterpatrone steht vertikal auf der Aufnahme- oder Halteplatte des Unterteils, auf dem lediglich durch einen Überwurf befestigt die Gehäuseglocke aufgesetzt ist. Eine derartige zweistückige Gehäuseausführung und Befestigung ist jedoch für den Durchsetz grösserer Mengen an Flüssigkeit je Zeiteinheit ungenügend, da hierfür ein hoher Druck erforderlich ist, d.h. der Druck heraufgesetzt werden muss, wenn man je Zeiteinheit bei z.B. gleichbleibenden Strömungsquerschnitten die Durchsatzmenge erhöhen will. Dieses erfordert nicht nur eine hohe Festigkeit und einen stabilen Zusammenhalt der Einrichtungsteile, damit dieselben dem erforderlichen hohen Druck der Flüssigkeit widerstehen können, sondern setzt auch entsprechende Strömungsquerschnitte in der Einrichtung voraus, die durch die bekannten Patronenfilter nicht gegeben sind.

Es ist daher die Aufgabe der vorliegenden Erfindung einen Patronenfilter und eine Filtereinrichtung der eingangs genannte Art ohne die Nachteile der bekannten Einrichtungen zu schaffen, mit denen eine längere Standzeit erreicht werden und die einen höheren Durchsatz von Flüssigkeit je Zeiteinheit zulassen soll.

Die Aufgabe wird erfindungsgemäss mit dem Patronenfilter der eingangs genannten Art gelöst, der mindestens eine Filterpatrone enthält und dessen Einlauf einen grösseren Strömungsquerschnitt aufweist als der Abflusskanal und bei dem die Aufnahmeplatte zusammen mit dem einen abnehmbaren Deckel besitzenden Gehäuse und einem Unterteil desselben fest miteinander verbunden aus einem Stück bestehen.

In vorteilhafter Weise wird mit dem Patronenfilter nach der Erfindung die gestellte Aufgabe gelöst und es wird eine gegenüber den bekannten Patronenfiltern längere Standzeit erreicht bzw. dieselbe heraufgesetzt. Weiterhin wird durch die Kombination der Elemente nach der Erfindung ermöglicht, dass mit einem höheren Druck der Flüssigkeit als bisher gearbeitet werden kann, so dass die Durchsätze erhöht werden können. Darüberhinaus besitzt der Patronenfilter nach der Erfindung eine Stabilität und Festigkeit, welche einem für hohe Durchsätze an Flüssigkeit je Zeiteinheit erforderlichen hohen Druck mechanisch widerstehen.

Vorteilhafte Ausführungsformen des Patronenfilters nach der Erfindung können mit den Merkmalen der abhängigen Ansprüche erreicht werden.

Es ist erfindungsgemäss auch eine Filtereinrichtung mit mindestens zwei Filterpatronen möglich, die parallel geschaltet zwischen einer Flüssigkeitszuleitung und einer Flüssigkeitsrückflusssleitung angeschlossen sind. Da die Flüssigkeit vorzugsweise von unten kommend in die Filterpatrone eintritt, setzt sie den Filter mit Verunreinigungen nach oben hin zunehmend zu. Damit wird der Filter nach oben zunehmend durchflossen. Die Parallelschaltung nach der Erfindung bzw. Koppelung von mindestens zwei parallelen Filterpatronen lässt einen wesentlich höheren Durchsatz von Flüssigkeit je Zeiteinheit zu als mit nur einem einzigen Patronenfilter mit nur einer einzigen Filterpatrone. Der einströmenden Flüssigkeit steht nämlich eine grössere Filterfläche und damit auch Durchströmungsfläche zur Verfügung als mit nur einer einzigen Filterpatrone. Bei z.B. zwei parallel angeschlossenen Filterpatronen wird z.B. eine doppelte Filterfläche angeboten. Damit kann der Druck infolge der beiden Filterpatronen wesentlich erhöht werden. Infolge der erfindungsgemäss vergrösserten Filterfläche wird daher auch ein Zusetzen derselben hinausgezögert. Durch die Parallelschaltung der mindestens zwei Filterpatronen wird daher die Standzeit der einzelnen Patronenfilter und damit diejenige der Filtereinrichtung erhöht. Dieses wird noch dadurch begünstigt, dass Patronenfilter verwendet werden, deren Stabilität und Festigkeit durch die fest miteinander verbundenen Elemente im Innern des Gehäuses gegen hohen Druck der einströmenden Flüssigkeit gewährleistet wird.

Wird z.B. in jeder Parallelreihe der Filtereinrichtung der Patronenfilter nach der Erfindung z.B. mit zwei Filterpatronen verwendet, so kann mit einem Durchsatz von 40 - 50 m³/h gefahren werden. Bei Verwendung von z.B. zwei Patronenfiltern nach der Erfindung mit z.B. jeweils zwei Filterpatronen kann mit einem Durchsatz der Flüssigkeit von 40-60 m³/h und bei Verwendung z.B. von drei Patronenfiltern mit jeweils zwei Filterpatronen mit einem Durchsatz von 60-80 m³/h gefahren werden. Der Durchsatz kann daher entsprechend der Anzahl der Filterpatronen und/oder Patronenfilter in jeder Parallelreihe entsprechend gesteigert werden. Es können Durchsätze von 25 bis 160 m³/h ohne gesteigerten Druckverlust und eine Filtration von z.B. Wasser mit 3-30 Mikron an Feinheit der Verunreinigungen erreicht werden. Dabei können diese Filtereinrichtungen bzw. Patronenfilter noch eine Reserve von 5-10 m³/h an überschüssigem Durchsatz aufnehmen. Es kann z.B. mit einem Durchsatz bis zu 600 m³/h an Flüssigkeit gefahren werden, wobei z.B. ein hoher Druck im Flüssigkeitskreislauf von z.B. 8-10 atm. (8,1 - 10,1 bar) angewendet werden kann. Dieses bedeutet gegenüber 2 atm. (2 bar) Druck im Flüssigkeitskreislauf bei bisher bekannten Patronenfiltern bzw. Filtereinrichtungen eine erhebliche Steigerung, die durch die Kombination der Merkmale des Patronenfilters bzw. der Filtereinrichtung nach der Erfindung erreicht werden kann.

Vorteilhafte Ausgestaltungen der Filtereinrichtung nach der Erfindung können mit den Merkmalen der abhängigen Ansprüche erreicht werden.

Der Patronenfilter und die Filtereinrichtung nach der Erfindung können zur Reinigung verschiedener Flüssigkeiten, insbesondere zur Aufbereitung von Wasser, vorzugsweise Industriewasser, eingesetzt werden.

Die Erfindung ist nachfolgend in Ausführungsbeispielen anhand der Zeichnung näher erläutert. Es zeigen:

Fig. 1 einen Patronenfilter im Längsschnitt in schematischer Darstellung, teilweise schaubildlich,

Fig. 2 zwei Patronenfilter parallel geschaltet im Längsschnitt in schematischer, teilweise schaubildlicher Darstellung,

Fig. 3 eine andere Ausführungsform der beiden Patronenfilter der Fig. 2 in schematischer Darstellung,

Fig. 4 einen Patronenfilter im Längsschnitt mit parallel geschalteten Filterpatronen in schematischer Darstellung,

Fig. 5 eine andere Ausführungsform des Patronenfilters der Fig. 4 in einer Draufsicht und

Fig. 6 eine Filtereinrichtung mit mehreren parallel geschalteten Patronenfiltern.

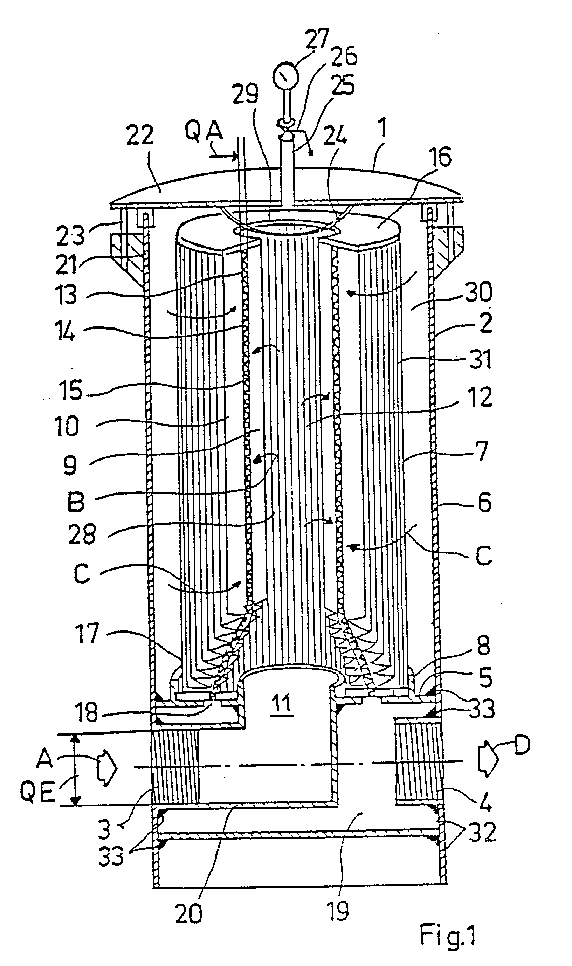

Bei dem Patronenfilter 1 der Fig. 1 liegt ein Gehäuse 2 vor, das eine Einlauföffnung 3 und eine Auslauföffnung 4 besitzt. Im unteren Teil des Gehäuses 2 befindet sich eine Aufnahme- oder Halteplatte 5, die mit der Gehäusewand 6 des zylindrischen Gehäuse 2 fest verbunden aus einem Stück besteht. Auf der Aufnahmeplatte 5 steht vertikal eine Filterpatrone 7, die an ihrem unteren Ende durch einen dieselbe umgebenden Kragen 8 der Aufnahmeplatte 5 gehalten wird. Die Filterpatrone 7 besteht aus zwei ringförmigen, gefalteten Filterelementen 9 und 10, die konzentrische um eine Öffnung 11 in der Aufnahmeplatte 5 angeordnet sind und somit einen vertikal sich erstreckenden zylindrischen Innenraum 12 bilden. Das innere Filterelement 9 und das äussere Filterelement 10 sind durch einen ringförmigen Abflusskanal 13 voneinander getrennt, in welchem sich an ein im wesentlichen ebenfalls zylindrisch angeordnetes Stützelement 14 befindet. Das Stützelement 14 besitzt Öffnungen 15 (in der Zeichnung nur angedeutet) für einen Flüssigkeitsdurchtritt und besteht aus einem biegsamen Material, z.B. Kunststoff, das einen Widerstand gegen ein Zusammendrücken in radialer Richtung bietet. Am oberen Ende sind die Filterelemente 9 und 10 zusammen mit dem Abflusskanal 13 durch eine Abdeckung 16 abgedeckt. Der Abflusskanal 13 mündet am unteren Ende 17 der Filterpatrone 7 in eine ringförmige Öffnung 18 der Aufnahmeplatte 5, die wiederum in eine Rückflussleitung bzw. einen Rückflusskanal 19 mündet, der an die Auslassöffnung 4 angeschlossen ist.

Die Einlauföffnung 3 ist über einen Zuführkanal 20 an die Eintrittsöffnung 11 angeschlossen, wobei die letztere als Kragen ausgebildet über die Aufnahmeplatte 5 nach oben heraus- und damit in den Innenraum 12 der Filterpatrone 7 hineinragt. Am Oberteil 21 ist das Gehäuse 2 durch einen Deckel 22 verschlossen, der durch Verschraubungen 23 fest und drucksicher mit dem Gehäuse 2 verbunden ist. Durch einen an der Innenseite des Deckels angeordneten Haltebügel 24 wird die Filterpatrone 7 an ihrem oberen Ende gehalten und gegebenenfalls nach unten gegen die Aufnahmeplatte 5 gedrückt. Der Deckel 22 besitzt weiterhin an einem Stutzen 25 einen Entlüfterhahn 26 und ein Manometer 27, mit dem der Flüssigkeitsdruck gemessen werden kann. Die Filterpatrone 7 wird z.B. durch den Kragen 8 und die kragenförmige Eintrittsöffnung 11 festgehalten und ist daher z.B. leicht austauschbar.

Bei Betrieb arbeitet der Patronenfilter 1 wie folgt:

Durch die Eintrittsöffnung 3 gelangt eine Flüssigkeit, z.B. zur Aufbereitung bestimmtes Wasser, gemäss Pfeil A unter Druck durch den Zuführkanal 20 und die Öffnung 11 in den Innenraum 12 und damit an die Innenfläche 28 des inneren Faltenfilterelements 9. Von dort her durchströmt die Flüssigkeit gemäss den Pfeilen 8 das Filterelement 9 und gelangt in den Abflusskanal 13. Die zugeführte Flüssigkeit fliesst auch weiterhin durch die Öffnung 29 am oberen Ende der Filterpatrone 7 in den Gehäuseinnenraum 30 und somit an die Aussenfläche 31 des äusseren Faltenfilterelementes 10. Von dort her durchströmt die Flüssigkeit dann das äussere Faltenfilterelement 10 von aussen nach innen in Richtung der Pfeile C in den Abflusskanal 13.

Im Abflusskanal 13 fliesst dann die dort eingestretene Flüssigkeit durch die Öffnungen 15 des Stützelementes 14 nach unten bis zur Abflussöffnung 18 in der Aufnahmeplatte 5. Nach Durchfliessen des Rückflusskanals 19 tritt sie dann gemäss Pfeil D aus der Auslauföffnung 4 aus. Durch das Stützelement 14, das aus Polyester hergestellt sein kann, wird der radiale Druck der Flüssigkeit abgefangen, der sich in Strömungsrichtung vor Eintritt in bzw. an der Filterpatrone aufbaut. Der Flüssigkeitsdruck von aussen und derjenige von innen auf die Filterelemente 9 und 10 und damit auf die Filterpatrone 7 sind gleich. Dadurch erhält die Filterpatrone 7 gegen diesen Druck eine entsprechende Stabilität und wird durch denselben nicht zusammengedrückt.

Je nach Menge der in der Flüssigkeit befindlichen Verunreinigungen werden diese in zunehmendem Masse in den Filterelementen 9 und 10 der Filterpatrone 7 nach oben hin abgefangen. Die Arbeitsweise und Wirkungsweise der Filterpatrone gegenüber der einströmenden und ablaufenden Flüssigkeit ist in der bereit genannten DE-A 2 629 466 beschrieben, weshalb an dieser Stelle auf dieselbe verwiesen wird.

Die Einlauföffnung 3 besitzt dabei einen Strömungsquerschnitt, der grösser, insbesondere wesentlich grösser als der Strömungsquerschnitt des Ablaufkanals 13 ist. Vorzugseise beträgt die Breite QE der Einlauföffnung 50 bis 150 mm, insbesondere 80-100 mm, und die Breite des ringförmigen Abflusskanals 35 bis 80 mm. Dadurch kann mit einem Druck der eintretenden Flüssigkeit von 1 bis 15 kg/cm² (0,98 bis 14,7 bar) und einem Durchsatz an Flüssigkeit von 30 m³/h gefahren werden. Bei den bisher bekannten, z.B. eingangs genannten Patronenfiltern war ein Druck von lediglich 6-8 kg/cm² (5,88 bis 7,84 bar) und ein Durchsatz von lediglich etwa 10 m³/h möglich.

Der Zuführkanal 20 ist in einem Unterteil 32 des Gehäuses 2 derart angeordnet, das er vom Rückflusskanal 19 konzentrisch umgeben ist. Mit dem Unterteil 32 steht der Patronenfilter 1 auf dem Boden auf. Das Gehäuse 2, die Aufnahmeplatte 5 sowie der Unterteil 32 bestehen aus Metall, vorzugsweise rostfreiem Stahl, und sind an Schweissstellen 33 miteinanader verschweisst, so dass sie fest miteinander verbunden aus einem Stück bestehen. Damit kann der gesamte Patronenfilter einem hohen Flüssigkeitsdruck widerstehen, so dass gegenüber den bisher bekannten Patronenfiltern die Durchsatzmenge an Flüssigkeit je Zeiteinheit erhöht werden kann. Dieses ist durch die einstückige Ausbildung des Gehäuses 2 und seiner die Filterpatrone, die Zu- und Ableitungen aufnehmenden Teile ermöglicht.

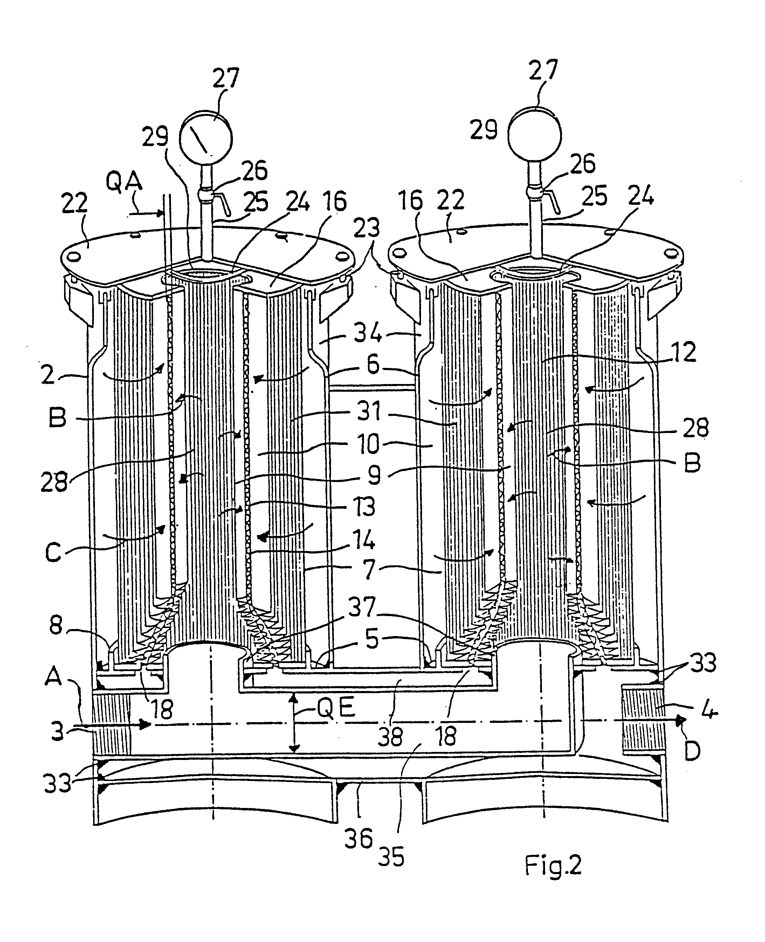

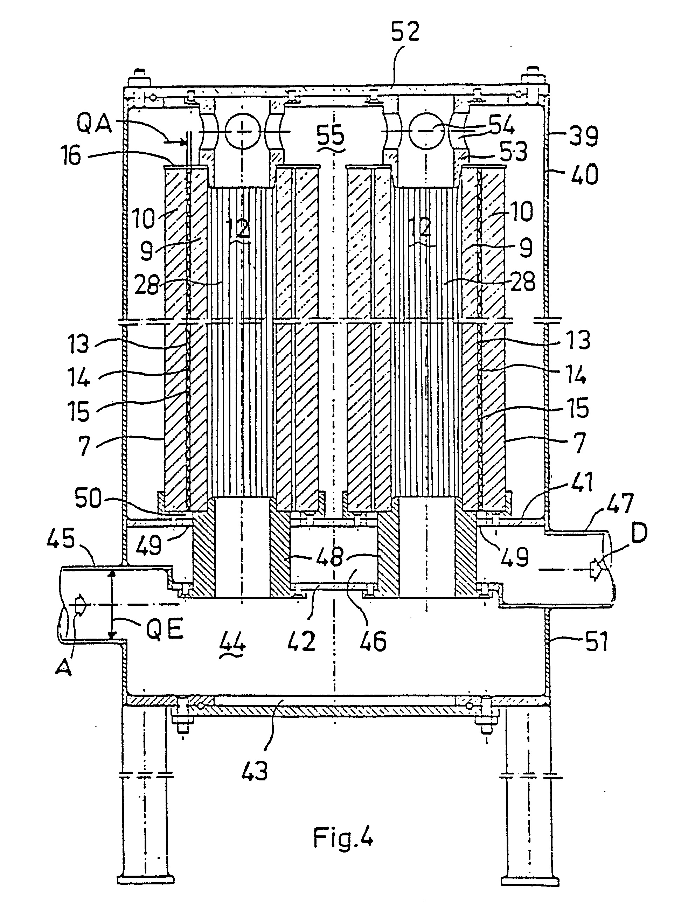

Bei der Ausführungsform nach Fig. 2, in welcher mit Fig. 1 gleiche Teile die gleichen Bezugszeichen haben, sind zwei Patronenfilter 34 mit jeweils der einen Filterpatrone 7 an einen gemeinsamen Zuführkanal 35 angeschlossen, der sich über ein Zwischenstück 36 erstreckt, das die beiden Patronenfilter 34 miteinander verbindet. Dabei befindet sich die Einlauföffnung 3 in der Gehäusewand 6 des einen Patronenfilters 34 und die Auslauföffnung 4 in der Gehäusewand 6 des anderen Patronenfilters 34. Die Patronenfilter 34 sind durch Abzweigleitungen oder Stutzen 37 parallel an den Zuführkanal 35 angeschlossen. Die Ringöffnungen 18 jedes Patronenfilters 34 sind dabei an den ebenfalls gemeinsamen Rückflusskanal 38 angeschlossen, so dass, wie auch bei der Ausführungsform nach Fig. 1, wiederum die Aussenfläche des inneren Filterelementes 9 und die Innenfläche des äusseren Filterelementes 10 an die Auslauföffnung 4 angeschlossen sind. Der einzelne Patronenfilter arbeitet in gleicher Weise, wie es bei dem vorstehenden Ausführungsbeispiel nach Fig. 1 im Einzelnen beschrieben wurde, weshalb an dieser Stelle darauf verwiesen wird. Durch die Parallelschaltung von zwei Patronenfiltern und damit zwei Filterpatronen an den Zuführkanal wird in vorteilhafter Weise gegenüber der Verwendung von nur einem einzigen Patronenfilter eine grössere Filterfläche geschaffen, so dass der Druck der einströmenden Flüssigkeit gegenüber der Ausführungsform nach Fig. 1 erhöht werden kann. Dadurch ist eine Filtereinrichtung geschaffen, mit der eine gegenüber dem einzelnen Patronenfilter nach Fig. 1 höhere Durchsatzmenge an Flüssigkeit je Zeiteinheit möglich gemacht werden kann.

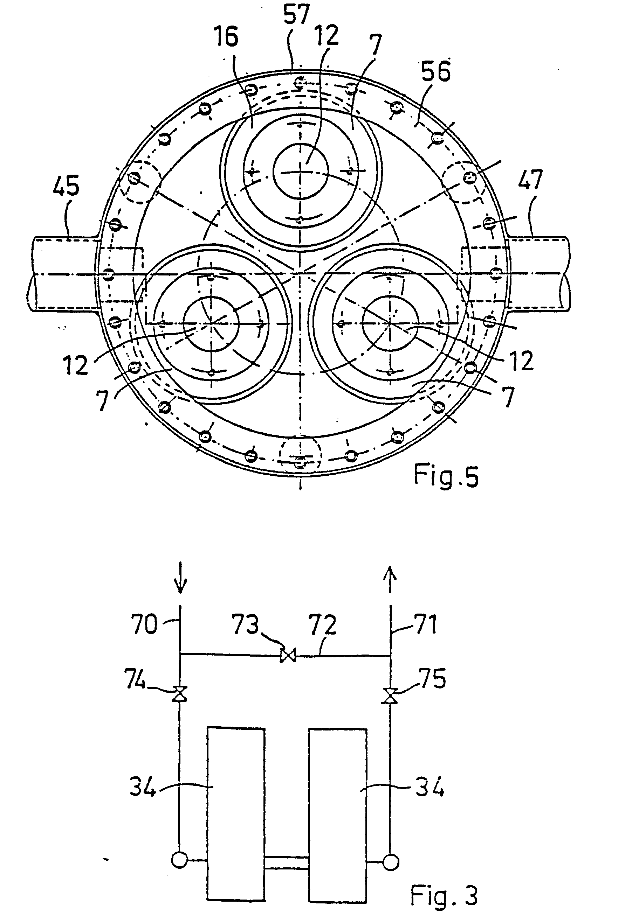

Die beiden Patronenfilter 34 können, wie Fig. 3 zeigt, zwischen einer Zuführleitung 70 und einer Rückführleitung 71 durch eine Leitung 72 überbrückt werden, in die ein Ventil 73 gelegt ist. Durch ein Zuführventil 74 und ein Rücklaufventil 75 können die Zuführleitung 70 bzw. die Rücklaufleitung 71 geöffnet oder geschlossen werden. Bei geschlossenem Ventil 73 und geöffneten Ventilen 74 und 75 sind die Patronenfilter 34 an ein Kreislaufsystem (nicht gezeigt) angeschlossen. Bei geschlossenen Ventilen 74 und 75 und geöffnetem Ventil 73 können die Patronenfilter 34 vom Kreislaufsystem abgeschaltet werden, ohne dass dabei der Kreislauf von Flüssigkeit unterbrochen wird. Sie können dann z.B. einer Reinigung und Überprüfung unterzogen werden.

Nach Fig. 4, in welcher wiederum mit der Ausführungsform nach Fig. 1 gleiche Teile die gleichen Bezugszeichen haben, liegt ein Patronenfilter 39 vor, in dessen Gehäuse 40 sich zwei Filterpatronen 7 befinden, die auf einer gemeinsamen Aufnahmeplatte 41 stehen. Unterhalb der Aufnahmeplatte 41 sind aufeinanderfolgend und mit einem Abstand zur Schaffung eines ausreichenden Strömungsquerschnittes für eine Flüssigkeit voneinander eine Trennplatte 42 und eine Bodenplatte 43 angeordnet. Der Raum 44 zwischen der Trennplatte 42 und der Bodenplatte 43 ist an eine Einlauföffnung 45 angeschlossen und der Raum 46 zwischen der Aufnahmeplatte 41 und der Trennplatte 42 an eine Auslauföffnung 47. Der Raum 44 bildet somit einen Zuführkanal und der Raum 46 einen Abführkanal für die Flüssigkeit. Vom Raum 44 führen parallel Abzweigstutzen 48 durch den Raum 46 hindurch in Öffnungen 49 der Aufnahmeplatte 41, die in den Innenraum 12 der jeweiligen Filterpatrone 7 hineinragen. Dabei steht die Filterpatrone 7 mit ihrem inneren Filterelement 9 derart auf dem Abzweigstutzen 48, dass der Abflusskanal 13 jeder Filterpatrone 7 in den noch verbleibenden Ringraum 50 zwischen Aufnahmeplatte 41 und Abzweigstutzen 48 mündet. Der Zuführkanal 44 und der Rückflusskanal 46 sind somit lediglich durch die Trennplatte 42 voneinander getrennt. Die Aufnahmeplatte 41, die Trennplatte 42 und die Bodenplatte 43 sind mit dem Gehäuse 40 und dessen Unterteil 51 wiederum verschweisst und somit fest verbunden, so dass der Patronenfilter wiederum einstückig ausgebildet ist. Zwischen dem aufgeschraubten Deckel 52 und dem oberen Ende der jeweiligen Filterpatrone 7 befinden sich Halteelemente 53, die Öffnungen 54 für den Durchtritt von Flüssigkeit in den Gehäuseinnenraum 55 besitzen.

Zur Arbeitsweise des Patronenfilters 39 wird auf die Ausführungen zu den Ausführungsformen nach Fig. 1 und 2 verwiesen. In gleicher Weise bzw. ähnlich wie im Ausführungsbeispiel nach Fig. 2 sind zwei Filterpatronen, die sich in einem Patronenfilter bzw. dessen Gehäuse befinden parallel geschaltet.

Bei der Ausführungsform nach Fig. 5, in der mit Fig. 1 und 3 gleiche Teile die gleichen Bezugszeichen haben, können in einem Gehäuse 56 eines Patronenfilters 57 drei Filterpatronen 7 in der Weise angeordnet sein, wie es nach Fig. 3 geschildert wurde, d.h. parallel an die gemeinsame Einlauföffnung 45 und die gemeinsame Auslauföffnung 47 angeschlossen sein. Dieses kann durch entsprechende Vergrösserung des Durchmessers des Gehäuses 56 gegenüber demjenigen des Gehäuses nach Fig. 3 erfolgen. Die drei Filterpatronen 7 sind dann an den gemeinsamen Raum 44 bzw. 46 angeschlossen. Durch entsprechende Vergrösserung des Durchmessers des Gehäuses kann daher die Anzahl von Filterpatronen in gewünschter Weise vergrössert und damit die Durchsatzmenge einer Flüssigkeit vergrössert werden. Hierbei kann auch der Strömungsquerschnitt der Einlauföffnung entsprechend heraufgesetzt werden, damit mit einem entsprechend höheren Flüssigkeitsdruck gefahren werden kann.

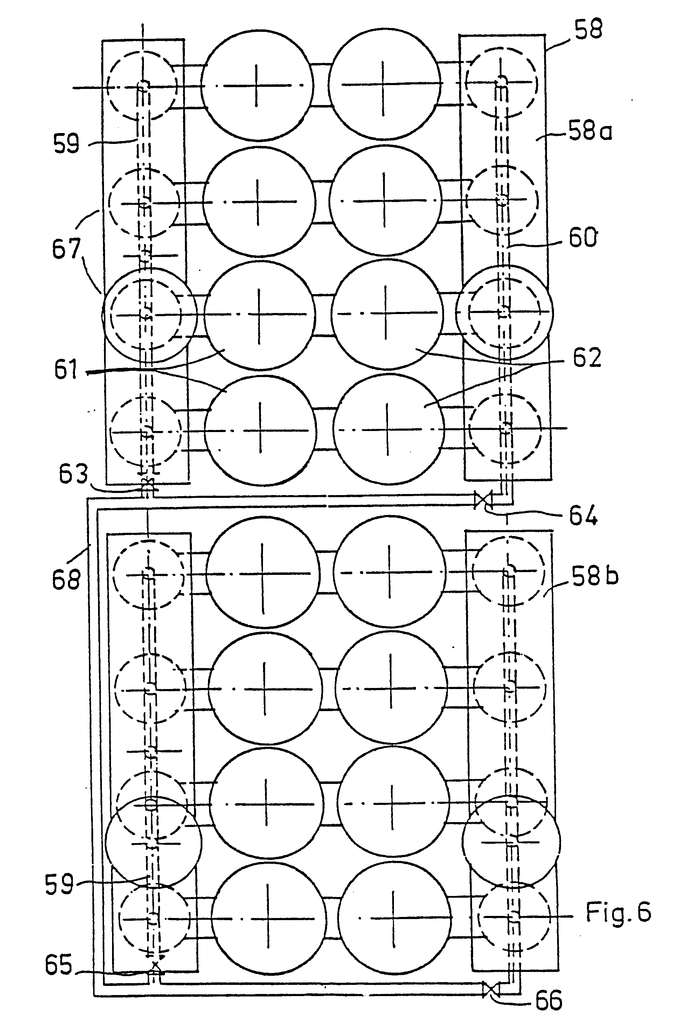

Fig. 6 zeigt noch eine Filtereinrichtung 58 mit einer Flüssigkeitszufuhrleitung 59 und einer Rückflussleitung 60, zwischen denen parallel geschaltet jeweils in einer Parallelreihe zwei Patronenfilter 61 und 62 angeordnet sind. Durch diese Erhöhung der parallelgeschalteten Patronenfilter kann der Durchsatz an aufzubereitender Flüssigkeit in anderer beliebiger Weise erhöht werden. Dabei sind zwei Filtergruppen 58a und 58b von parallelen Reihen 67 von Patronenfiltern 61 und 62 durch eine Leitung 68 mit entsprechenden Anschlüssen zusammengeschaltet. Durch Ventile 63, 64, 65 und 66 kann eine Parallel- oder Hintereinanderschaltung der beiden Filtergruppen 58a und 58b oder z.B. auch eine Abschaltung der einen oder der anderen Filtergruppe 58a bzw. 58b erfolgen.

**Patentansprüche**

1. Patronenfilter, bei dem ein Gehäuse (2, 40, 56) mit einem Einlauf (3, 45) und einem Auslauf (4, 47) für Flüssigkeit vorliegt, auf einer Aufnahmeplatte (5, 41) des Gehäuses (2, 40, 56) mindestens eine innere (9) und eine äussere (10) konzentrische, im wesentlichen zylindrische Filterelemente aufweisende Filterpatrone (7) angeordnet ist, wobei einerseits die Innenfläche (28) des inneren Filterelements (9) über einem Zuführkanal (20, 35, 44, 59) an die Einlauföffnung (3, 45) angeschlossen ist und andererseits mit der Aussenfläche (31) des äusseren Filterelementes (10) in Strömungsverbindung steht und mindestens eines der Filterelemente ein gefaltetes Filterelement ist, die beiden Filterelemente (9, 10) durch einen ringförmigen an den Auslauf (4, 47) angeschlossenen Abflusskanal (13) getrennt sind, in welchem ein im wesentlichen zylindrisch angeordnetes Stützelement (14) mit Öffnungen (15) für einen Flüssigkeitsdurchfluss angeordnet ist, das aus biegsamen Material besteht und Widerstand gegen ein Zusammendrücken in radialer Richtung leistet, dadurch gekennzeichnet, dass die Einlauföffnung (3, 45) einen grösseren Strömungsquerschnitt aufweist als der Abflusskanal (13) und die Aufnahmeplatte (5, 41) zusammen mit einen drucksicher verschliessbaren Deckel (22, 52) besitzendem Gehäuse (2, 40, 56) und einem Unterteil (32) desselben fest miteinander verbunden aus einem Stück bestehen.

2. Patronenfilter nach Anspruch 1, dadurch gekennzeichnet, dass er mindestens zwei Filterpatronen (7) enthält.

3. Patronenfilter nach Anspruch 2, dadurch gekennzeichnet, dass die Filterpatronen (7) in einem gemeinsamen Gehäuse (40) enthalten sind.

4. Patronenfilter nach Anspruch 2 oder 3, dadurch gekennzeichnet, dass bei mehreren Filterpatronen (7) ein gemeinsamer Zuführkanal (35, 44) mit einer entsprechenden Anzahl von Abzweigleitungen (37, 48) vorliegt, so dass die Filterpatronen (7) parallel an den Zuführkanal (35, 44) angeschlossen sind.

5. Patronenfilter nach einem der Ansprüche 1 bis 4, dadurch gekennzeichnet, dass der Zuführkanal (20, 35) vom Rückflusskanal (19, 38) z.B. konzentrisch, umgeben ist.

6. Patronenfilter nach einem der Ansprüche 1 bis 5, dadurch gekennzeichnet, dass die Aufnahmeplatte (5, 41) der Gehäuseboden ist.

7. Patronenfilter nach einem der Ansprüche 1 bis 4, dadurch gekennzeichnet, dass der Zuführkanal (44) und der Rückflusskanal (46) nebeneinander durch eine, z.B. gemeinsame, Wand (42) voneinander getrennt angeordnet sind.

8. Patronenfilter nach Anspruch 7, dadurch gekennzeichnet, dass unterhalb der Aufnahmeplatte (41) aufeinanderfolgend eine Trennplatte (42) und eine Bodenplatte (43) angeordnet und mit dem Gehäuse (40) unlösbar fest verbunden sind und in den an den Auslauf (47) angeschlossenen oberen Raum (46) zwischen der Aufnahmeplatte (41) und der Trennplatte (42) der Ausgang (47) des Abflusskanals (13) der mindestens einen Filterpatrone mündet und der untere an den Einlauf (45) angeschlossenen Raum (44) zwischen der Trennplatte (42) und der Bodenplatte (43) über einen Einlassstutzen (48) mit dem Innenraum der mindestens einen Filterpatrone verbunden ist.

9. Patronenfilter nach einem der Ansprüche 1 bis 8, dadurch gekennzeichnet, dass mindestens das Gehäuse (2, 40, 56) und die Aufnahmeplatte (5, 41) sowie der Unterteil des Gehäuses (32, 51) aus Metall, vorzugsweise aus rostfreiem Stahl, hergestellt und miteinander verschweisst sind.

10. Patronenfilter nach Anspruch 8 oder 9, dadurch gekennzeichnet, dass die Trennplatte (42) und die Bodenplatte (43) aus Metall, vorzugsweise aus rostfreiem Stahl, hergestellt und mit dem Gehäuse (40) verschweisst sind.

11. Patronenfilter nach einem der Ansprüche 1 bis 10, dadurch gekennzeichnet, dass die Breite (QE) der Einlauföffnung (3, 45) 50 bis 150 mm und die Breite (QA) des Abflusskanals (13) von 35 bis 80 mm beträgt.

12. Patronenfilter nach Anspruch 11, dadurch gekennzeichnet, dass die Breite (QE) der Einlauföffnung (3, 45) 80 bis 100 mm und die Breite (QA) des Abflusskanals (13) 50 mm beträgt.

13. Patronenfilter nach einem der Ansprüche 1 bis 12, dadurch gekennzeichnet, dass die mindestens eine vertikal angeordnete Filterpatrone (7) mit ihrem unteren Ende an den Einlauf (3, 45) und den Auslauf (4, 51) angeschlossen ist.

14. Filtereinrichtung mit dem Patronenfilter nach einem der Ansprüche 1 bis 13, dadurch gekennzeichnet, dass mindestens zwei Filterpatronen (7) parallel geschaltet werden und zwischen einer Flüssigkeitszuleitung (35, 59) und einer Flüssigkeitsrückflussleitung (36, 60) angeschlossen sind.

15. Filtereinrichtung nach Anspruch 14, dadurch gekennzeichnet, dass in jeder Parallelreihe mindestens zwei Filterpatronen (7) vorliegen.

16. Filtereinrichtung nach Anspruch 15, dadurch gekennzeichnet, dass in jeder Parallelreihe (61, 62) mindestens ein Patronenfilter mit den mindestens zwei Filterpatronen (7) vorliegt.

17. Filtereinrichtung nach Anspruch 14, dadurch gekennzeichnet, dass mindestens zwei Patronenfilter (61, 62) mit jeweils mindestens einer Filterpatrone parallel geschaltet werden und zwischen der Zuleitung (59) und der Rückflussleitung (60) angeschlossen sind.

## Claims

1. Cartridge filter, in which there is a housing (2, 40, 56) with an inlet (3, 45) and an outlet (4, 47) for liquid, at least one inner (9) and one outer (10) concentric filter cartridge (7) having substantially cylindrical filter elements are arranged on a carrier plate (5, 41) of the housing (2, 40, 56), the inner surface (28) of the inner filter element (9) being connected, on the one hand, via a feed channel (20, 35, 44, 59) to the inlet opening (3, 45) on the other hand, being in flow connection with the outer surface (31) of the outer filter element (10), and at least one of the filter elements being a folded filter element, the two filter elements (9, 10) are separated by an annular outflow channel (13) which is connected to the outlet (4, 47) and in which a support element (14) in a substantially cylindrical arrangement with openings (15) for a liquid flowing through is located, the support element consisting of a flexible material and exerting a resistance against compression in the radial direction, characterized in that the inlet opening (3, 45) has a larger flow cross-section than the outflow channel (13), and the carrier plate (5, 41) together with the housing (2, 40, 56), having a lid (22, 52) which can be closed pressure-tight, and a lower part (32) thereof consist of one piece in rigid mutual connection.

2. Cartridge filter according to Claim 1, characterized in that it contains at least two filter cartridges (7).

3. Cartridge filter according to Claim 2, characterized in that the filter cartridges (7) are contained in one common housing (40).

4. Cartridge filter according to Claim 2 or 3, characterized in that, in the case of several filter cartridges (7), there is a common feed channel (35, 44) with a corresponding number of branch lines (37, 48), so trat the filter cartridges (7) are connected in parallel to the feed channel (35, 44).

5. Cartridge filter according to one of claims 1 to 4, characterized in that the feed channel (20, 35) is surrounded, for example concentrically, by the return flow channel (19, 38).

6. Cartridge filter according to one of Claims 1 to 5, characterized in that the carrier plate (5, 41) is the housing bottom.

7. Cartridge filter according to one of Claims 1 to 4, characterized in that the feed channel (44) and the return flow channel (46) are arranged side by side and separated from one another by a wall (42), for example a common wall.

8. Cartridge filter according to Claim 7, characterized in that, underneath the carrier plate (41), successively a separating plate (42) and a bottom plate (43) are arranged and joined unreleasably and rigidly to the housing (40), and the outlet (47) of the outflow channel (13) of the filter cartridge, of which there is at least one, leads into the upper space (46), connected to the outlet (47), between the carrier plate (41) and the separating plate (42), and the lower space (44), connected to the inlet (45), between the separating plate (42) and the bottom plate (43) is connected via an inlet branch (48) to the interior of the filter cartridge, of which there is at least one.

9. Cartridge filter according to one of Claims 1 to 8, characterized in that at least the housing (2, 40, 56) and the carrier plate (5, 41) as well as the lower part of the housing (32, 51) are made of metal, preferably of stainless steel, and are welded to one another.

10. Cartridge filter according to Claim 8 or 9, characterized in that the separating plate (42) and the bottom plate (43) are made of metal, preferably of stainless steel, and are welded to the housing (40).

11. Cartridge filter according to one of Claims 1 to 10, characterized in that the width (QE) of the inlet opening (3, 45) is 50 to 150 mm and the width (QA) of the outflow channel (17) is 35 to 80 mm.

12. Cartridge filter according to Claim 11, characterized in that the width (QE) of the inlet opening (3, 45) is 80 to 100 mm and the width (QA) of the outflow channel (13) is 50 mm.

13. Cartridge filter according to one of Claims 1 to 12, characterized in that the vertically arranged filter cartridge (7), of which there is at least one, is connected by its lower end to the inlet (3, 45) and the outlet (4, 51).

14. Filter device with the cartridge filter according to one of Claims 1 to 13, characterized in that at least two filter cartridges (7) are arranged in parallel and are connected between a liquid feed line (35, 59) and a liquid return flow line (36, 60).

15. Filter device according to Claim 14, characterized in that there are at least two filter cartridges (7) in each parallel row.

16. Filter device according to Claim 15, characterized in that there is at least one cartridge filter with the filter cartridges (7), of which there are at least two, in each parallel row (61, 62).

17. Filter device according to Claim 14, characterized in that at least two cartridge filters (61, 62) with in each case at least one filter cartridge are arranged in parallel and are connected between the feed line (59) and the return flow line (60).

## Revendications

1. Filtre à cartouche du type comportant un corps (2, 40, 56) avec une entrée (3, 45) et une sortie (4, 47) pour du liquide, au moins une cartouche filtrante (7), qui comporte des éléments filtrants intérieur (9) et extérieur (10) sensiblement cylindriques et coaxiaux, et qui est disposée sur une plaque de montage (5, 41) du corps, la surface intérieure (28) de l'élément filtrant intérieur (9), d'une part, étant raccordée par un conduit d'amenée (20, 35, 44, 59) à l'ouverture d'entrée (3, 45) et, d'autre part, étant en communication d'écoulement avec la surface extérieure de l'élément filtrant extérieur (10), au moins l'un des éléments (9, 10) étant un élément filtrant plissé, tandis que les deux éléments (9, 10) sont séparés par un conduit d'évacuation annulaire (13) raccordé à la sortie (4, 47), et dans lequel est disposé un élément d'appui (14) agencé de manière sensiblement cylindrique, cet élément, réalisé en matière souple, présentant des orifices (15) pour le passage du liquide et offrant une résistance contre l'écrasement en direction radiale, caractérisé en ce que l'ouverture d'entrée (3, 45) présente une section d'écoulement plus grande que celle du conduit d'évacuation (13) et en ce que la plage de montage (5, 41), le corps (2, 40, 56) comportant un couvercle verrouillable (22, 52) de manière à résister à la pression et une partie inférieure (32) de ce corps, sont assemblés en une seule pièce et à demeure.

2. Filtre à cartouche suivant la revendication 1, caractérisé en ce qu'il comprend au moins deux cartouches filtrantes (7).

3. Filtre à cartouche suivant la revendication 2, caractérisé en ce que les cartouches filtrantes (7) sont contenues dans un corps commun (40).

4. Filtre à cartouche suivant la revendication 2 ou 3, caractérisé en ce que, dans le cas de plusieurs cartouches filtrantes (7), il est prévu un conduit d'amenée commun (35, 44) présentant un nombre correspondant de conduits de branchement (37, 48), de sorte que les cartouches filtrantes (7) sont raccordées en parallèle à ce conduit d'amenée (35, 44).

5. Filtre à cartouche suivant l'une quelconque des revendications 1 à 4, caractérisé en ce que le conduit d'amenée (20, 35) est entouré, par exemple de façon coaxiale, par le conduit de retour (19, 38).

6. Filtre à cartouche suivant l'une quelconque des revendications 1 à 5, caractérisé en ce que la plaque de montage (5, 41) est le fond du corps.

7. Filtre à cartouche suivant l'une quelconque des revendications 1 à 4, caractérisé en ce que le conduit d'amenée (44) et le conduit de retour (46) sont disposés l'un à côté de l'autre tout en étant séparés l'un de l'autre par une paroi (42), par exemple commune.

8. Filtre à cartouche suivant la revendication 7, caractérisé en ce qu'une plaque de séparation (42) et une plaque de fond (43) sont disposées l'une derrière l'autre en dessous de la plaque de montage (41), ces plaques étant reliées rigidement et de manière inamovible au corps (40) et, dans le volume supérieur (46) formé entre la plaque de montage (41) et la plaque de séparation (42) et raccordé à la sortie (47) débouche la sortie (47) du conduit d'évacuation (13) d'au moins une cartouche filtrante, tandis que le volume inférieur (44) formé entre la plaque de fond (43) et la plaque de séparation (42) et raccordé à l'entrée (45) est relié par une tubulaire d'entrée (48) au volume intérieur d'au moins une cartouche filtrante.

9. Filtre à cartouche suivant l'une quelconque des revendications 1 à 8, caractérisé en ce qu'au moins le corps (2, 40, 56) et la plaque de montage (5, 41) ainsi que la partie inférieure (32, 51) du corps sont en métal, de préférence en acier inoxydable, et sont assemblés entre eux par soudage.

10. Filtre à cartouche suivant la revendication 8 ou 9, caractérisé en ce que la plaque de séparation (42) et la plaque de fond (43) sont en métal, de préférence en acier inoxydable et sont assemblées avec le corps (40) par soudage.

11. Filtre à cartouche suivant l'une quelconque des revendications 1 à 10, caractérisé en ce que la largeur (QE) de l'ouverture d'entrée (3, 45) est comprise entre 50 et 150 mm et la largeur (QA) du conduit d'évacuation (13) est comprise entre 35 et 80 mm.

12. Filtre à cartouche suivant la revendication 11, caractérisé en ce que la largeur (QE) de l'ouverture d'entrée (3, 45) est comprise entre 80 et 100 mm et la largeur (QA) du conduit d'évacuation (13) est de 50 mm.

13. Filtre à cartouche suivant l'une quelconque des revendications 1 à 12, caractérisé en ce qu'au moins une cartouche filtrante (7), disposée verticalement, est raccordée par son extrémité inférieure à l'entrée (3, 45) et à la sortie (4, 51).

14. Installation de filtration comportant le filtre à cartouche suivant l'une quelconque des revendications 1 à 13, caractérisée en ce qu'au moins deux cartouches filtrantes (7) sont montées en parallèle et raccordées entre un conduit d'amenée de liquide (35, 59) et un conduit de retour de liquide (36, 60).

15. Installation de filtration suivant la revendication 14, caractérisée en ce qu'au moins deux cartouches filtrantes (7) sont prévues dans chaque rangée en parallèle.

16. Installation de filtration suivant la revendication 15, caractérisée en ce que dans chaque rangée en parallèle (61, 62) est prévu au moins un filtre à cartouche comportant au moins deux cartouches filtrantes (7).

17. Installation de filtration suivant la revendication 14, caractérisée en ce qu'au moins deux filtres à cartouche (61, 62), comportant chacun au moins une cartouche filtrante, sont montés en parallèle et raccordés entre le conduit d'amenée (59) et le conduit de retour (60).

Fig.1

Fig.2

Fig.4

16  57  12  7  56

45  47

12  12

7  7

**Fig.5**

70  73  72  71

74  75

34  34

**Fig. 3**

0 144 360

Fig.6

17